Europäisches Patentamt

(19) European Patent Office

Office européen des brevets

(11) Veröffentlichungsnummer: **0 034 356**
**B1**

## EUROPÄISCHE PATENTSCHRIFT

(12)

(45) Veröffentlichungstag der Patentschrift:
**29.06.83**

(21) Anmeldenummer: **81101036.2**

(22) Anmeldetag: **13.02.81**

(51) Int. Cl.³: **B 62 D 27/06**, E 05 C 9/08

(54) **Drehstangenverschluss für eine abklappbare Bordwand von Lastfahrzeugen.**

(30) Priorität: **13.02.80 DE 3005403**

(43) Veröffentlichungstag der Anmeldung:
**26.08.81 Patentblatt 81/34**

(45) Bekanntmachung des Hinweises auf die Patenterteilung:
**29.06.83 Patentblatt 83/26**

(84) Benannte Vertragsstaaten:
**AT BE CH DE FR IT LI NL**

(56) Entgegenhaltungen:
**DE-B-2 311 459**
**DE-C-9 58 273**
**DE-C-1 136 224**
**DE-C-2 112 490**
**DE-U-1 906 879**
**DE-U-1 985 489**

(73) Patentinhaber: **F. HESTERBERG & SÖHNE GmbH & Co.**
**KG, Heilenbecker Strasse 50-60,**
**D-5828 Ennepetal 1 (DE)**

(72) Erfinder: **Nieland, Friedhelm, Bonkampstrasse 40,**
**D-5805 Breckerfeld (DE)**

(74) Vertreter: **Kneissl, Richard, Dr., Widenmayerstrasse 46,**
**D-8000 München 22 (DE)**

ACTORUM AG

Drehstangenverschluss für eine abklappbare Bordwand von Lastfahrzeugen

Die Erfindung betrifft einen Verschluss für eine an einem Anschlag eines festen Aufbauteils anliegende abklappbare Bordwand von Lastfahrzeugen, mit einer an dieser drehbar angeordneten, in der geschlossenen Bordwandstellung senkrecht verlaufenden Drehstange, mit einem an deren oberem Ende befestigten, in Schliessstellung ein Gegenelement am oberen Ende des festen Aufbauteils hintergreifenden Drehhaken und mit einem kraftschlüssig mit der Drehstange verbundenen schwenkbaren Handhebel.

Ein Drehstangenverschluss dieser Art ist beispielsweise aus dem DE-U Nr. 1906879 bekannt. Solche Drehstangenverschlüsse werden vielfach für schwere Lastfahrzeuge mit hohen abklappbaren Bordwänden verwendet, weil sie es gestatten, den Handhebel in einer bequem erreichbaren Höhe der Bordwand anzuordnen. Ein wesentlicher Nachteil dieser bekannten Drehstangenverschlüsse besteht darin, dass der Drehhaken bei entriegeltem Verschluss über die Bordwand vorspringt, weshalb es beim Hochklappen der Bordwand vorkommen kann, dass der Drehhaken in ein nahe am Rand der Ladefläche abgestelltes Ladegut eindringen und dieses beschädigen kann.

Der Erfindung lag die Aufgabe zugrunde, einen Drehstangenverschluss der eingangs bezeichneten Art so weiter zu bilden, dass der Drehhaken beim Hochklappen der Bordwand mit entriegeltem Verschluss nicht in den Laderaum vorstehen kann.

Die Aufgabe wird gemäss der Erfindung dadurch gelöst, dass bei einem Verschluss der eingangs bezeichneten Art an der Drehstange ein Vorsprung befestigt ist, der bei hochgeklappter Bordwand und entriegeltem Bordwandverschluss sich am Anschlag derart abstützt, dass die Bordwand sich in einem vorgegebenen Abstand von dem Anschlag befindet.

Der Vorsprung an der Drehstange bewirkt, dass in der Offenstellung des Verschlusses die Bordwand nicht vollständig an dem festen Aufbauteil anliegen kann, d.h. also, dass die Bordwand beim Hochklappen die senkrechte Lage nicht erreichen kann. Beim Schliessen des Verschlusses wird dann durch Drehen der Drehstange der Vorsprung weggeschwenkt, wodurch die Bordwand allmählich näher an den Anschlag gelangen kann. Dabei dreht sich aber auch gleichzeitig der Drehhaken zur Seite und weicht um so mehr seitlich aus, als die Bordwand an den Anschlag herangeführt wird. Der Drehhaken steht also beim Schliessvorgang zu keinem Zeitpunkt in den Laderaum vor. Das feste Aufbauteil kann beispielsweise aus einer Runge bestehen, an deren Oberseite das Gegenelement für den Drehhaken befestigt ist. Das Gegenelement besteht bei solchen Verschlüssen normalerweise aus einem senkrecht verlaufenden Rundzapfen. Der Anschlag besteht üblicherweise aus einer Anschlagleiste, die beispielsweise an einer Runge befestigt ist.

Es wird bevorzugt, dass der Vorsprung ein gutes Stück unterhalb des Drehhakens an der Drehstange befestigt ist, und zwar insbesondere in Höhe des Handhebels (gemäss Patentanspruch 2), weil im letzteren Fall der Vorsprung in einfacher Weise mit dem Betätigungsmechanismus für die Drehstange kombiniert werden kann.

Gemäss einer weiteren bevorzugten Ausführungsform ist der Vorsprung als Haken ausgebildet und greift in Schliessstellung in eine Ausnehmung am festen Aufbauteil ein (gemäss Patentanspruch 3). Diese Ausführungsform besitzt ein verbessertes Heranholvermögen für die Bordwand, weil die Bordwand bereits herangeholt wird, bevor der Drehhaken das für ihn vorgesehene Gegenelement erreichen kann.

Eine Weiterbildung besteht darin, dass der Handhebel auf einen an der Drehstange befestigten Kurbelarm wirkt, und zwar über einen einerseits am Handhebel und andererseits am Kurbelarm angelenkten Lenker, wobei in der Schliessstellung die Schwenkachse des Handhebels zwischen den beiden Anlenkachsen des Verbindungsglieds liegt und die Schnittpunkte dieser drei Achsen zusammen mit der Drehachse der Drehstange mit einer Achsnormalebene auf einer — gesehen von ausserhalb der Bordwand in Richtung auf eine an der abklappbaren Bordwand befestigte, den Betätigungsmechanismus für die Drehstange tragende Grundplatte — konvexen Kurve liegen (gemäss Patentanspruch 4). Diese Betätigungsanordnung besitzt den Vorteil, dass in Schliessstellung der Handhebel sich in einer Übertotpunktlage befindet und deshalb automatisch in Schliessstellung gehalten wird. Diese Wirkung wird noch verstärkt, wenn gegen die Innenseite der Bordwand, z.B. durch das Ladegut, ein Druck ausgeübt wird. Ein solcher Druck versucht, die Bordwand nach aussen zu schieben und dabei die Drehstange in einem Sinn zu drehen, dass der Lenker den Handhebel niederhält.

Bei der zuletzt genannten Ausführungsform wird es bevorzugt, dass der Vorsprung und der Kurbelarm als einheitliches Sperrelement ausgebildet sind, dass die Drehachse der Drehstange durch den mittleren Teil des Sperrelements hindurchgeht und dass die Drehstange kraftschlüssig mit dem Sperrelement verbunden ist (gemäss Patentanspruch 5). Diese Ausführungsform hat den Vorteil einer sehr einfachen und kompakten Bauweise.

Bei einer Weiterbildung der vorstehend beschriebenen Ausführungsform ist der äussere Teil des Handhebels in bezug auf seinen inneren Teil um eine in Schliessstellung senkrecht zur Grundplatte verlaufende Achse abklappbar (gemäss Patentanspruch 6), so dass der Handhebel bei geöffnetem Verschluss nicht zu weit vom Aufbau absteht.

Bei einer bevorzugten Ausführungsform weist die Grundplatte zwei parallel im Abstand voneinander verlaufende Längsrippen auf, in denen die Drehachse des Sperrelements und gegebenenfalls auch die Schwenkachse des Handhebels gelagert sind (gemäss Patentanspruch 7). Die Grundplatte kann aber beispielsweise auch eine andere Form besitzen, wie z.B. die Form einer Wanne.

Bei einer Weiterbildung der Ausführungsform mit parallel im Abstand voneinander verlaufenden Längsrippen auf der Grundplatte erstrecken sich die Längsrippen bis über die Abklappachse des äusseren Teils des Handhebels hinaus (gemäss Patentanspruch 8), so dass bei geschlossenem Handhebel ein Stück des äusseren Teils zwischen diesen Längsrippen zu liegen kommt, wodurch der Handhebel in gestreckter Stellung gehalten wird.

Eine vorteilhafte Weiterbildung dieser Ausführungsform besteht darin, dass die Längsrippen im Bereich des äusseren Teils des Handhebels auf der dem Handhebel zugewandten Seite jeweils eine Abschrägung aufweisen und so einen Einlauftrichter für den äusseren Teil des Handhebels bilden (gemäss Patentanspruch 9). Diese Ausführungsform erleichtert das Einschwenken des Handhebels in Schliessstellung. Wenn der Handhebel beim Schliessen nicht genau waagrecht gehalten wird, so trifft er während des Schliessvorgangs auf eine der Abschrägungen auf und wird beim Vollenden des Schliessvorgangs selbsttätig in eine waagrechte Lage gedrückt.

Die Erfindung wird nun an Hand der beigefügten Zeichnungen näher erläutert.

In den Zeichnungen zeigen:

Fig. 1 eine Ansicht eines erfindungsgemässen Verschlusses, der an einer Bordwand befestigt ist,

Fig. 2 einen Schnitt durch den Verschluss von Fig. 1 an der Linie II-II in Schliessstellung,

Fig. 3 einen Schnitt durch den Verschluss von Fig. 1 an der Linie II-II in Offenstellung, und

Fig. 4 eine perspektivische Ansicht des Verschlusses von Fig. 1 beim Hochklappen einer Bordwand.

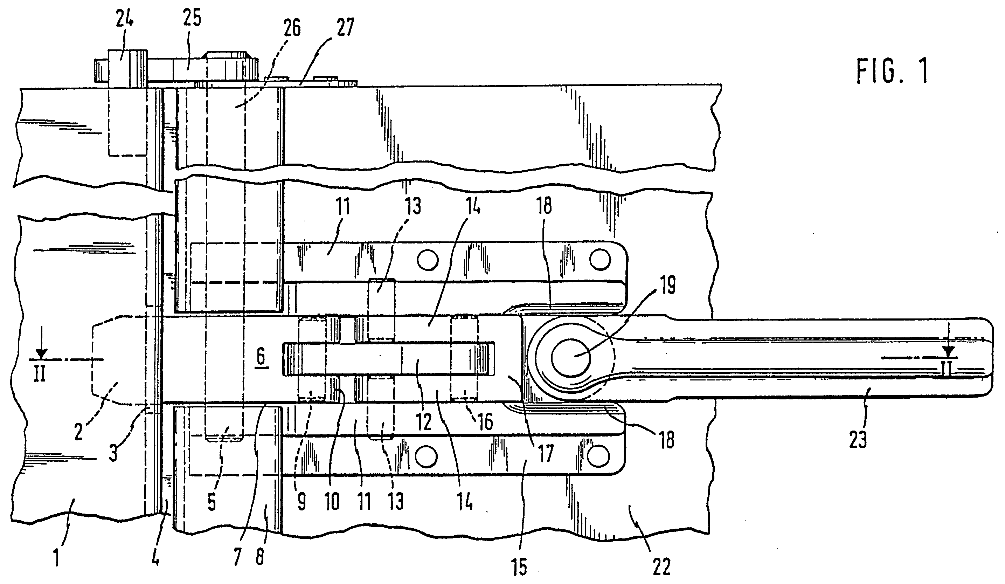

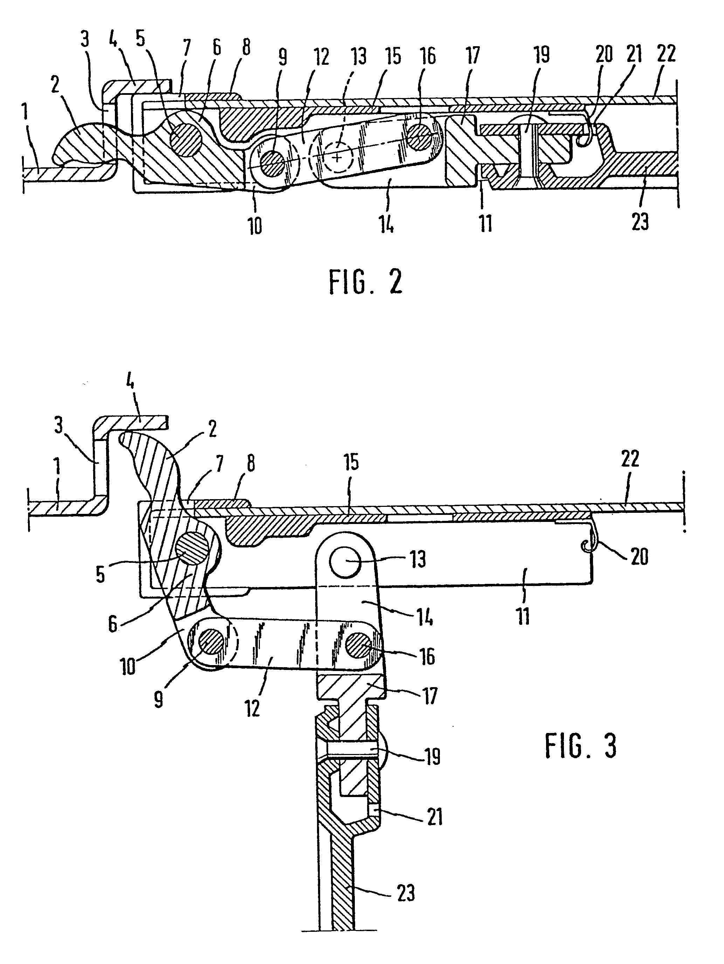

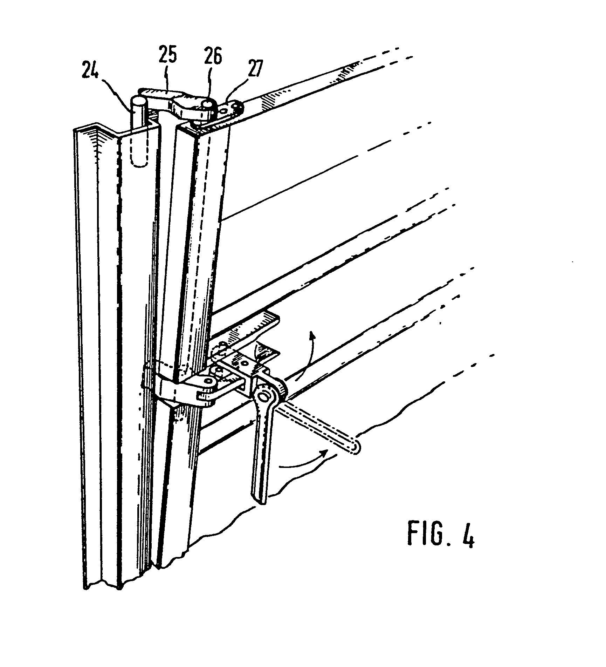

Der in den Zeichnungen dargestellte Verschluss besitzt eine Grundplatte 15, auf der zwei Längsrippen 11 ausgebildet sind, zwischen denen der Betätigungsmechanismus für eine Drehstange 26 angeordnet ist. Die Grundplatte ist auf eine abklappbare Bordwand 22 eines Lastfahrzeugs aufgenietet. Diese Bordwand ist an der Stirnseite durch ein U-förmiges Profil 8 eingefasst. Das Profil 8 besitzt im Bereich des Betätigungsmechanismus eine Aussparung 7. Um die dadurch bedingte Schwächung der Bordwandkante auszugleichen, besitzt die Grundplatte 15 in diesem Bereich eine Verstärkung. Im vorderen Bereich des Verschlusses sitzt auf einer Drehachse 5 ein Sperrelement 6, bestehend aus einem Haken 2 und einem gegabelten Kurbelarm 10. Dieser Haken 2 greift in Schliessstellung gemäss den Fig. 1 und 2 in eine seitliche Ausnehmung 3 einer Runge 1 ein. Gemäss Fig. 3 liegt jedoch in der Offenstellung der Haken 2 an einer Anschlagleiste 4 der Runge 1 an. Die Drehachse 5 geht in die Drehstange 26 über, die über die obere Kante der Bordwand vorspringt und dort mittels einer Lagerplatte 27 gelagert ist. Am Ende der Drehstange 26 ist ein Drehhaken 25 befestigt, der beim Schliessen einen Zapfen 24 an der Runge hintergreift. In Fig. 4 ist gezeigt, wie der Haken 2 des Sperrelements 6 an der Anschlagleiste der Runge anstösst, so dass bei geöffnetem Verschluss der Drehhaken 25 nicht in den Laderaum vorspringen kann.

Im mittleren Bereich des Verschlusses ist in den Längsrippen 11 ein gegabelter innerer Teil 14 eines Handhebels 17 mittels zweier Schwenkachsen 13 angelenkt. An diesem gegabelten inneren Teil 14 des Handhebels 17 ist über eine Abklappachse 19 ein äusserer Teil 23 des Handhebels 17 angelenkt, der in Offenstellung des Verschlusses aufgrund seines eigenen Gewichts nach unten hängt. Die Längsrippen 11 haben in diesem Bereich Abschrägungen 18, wodurch ein Einlauftrichter für den äusseren Teil 23 des Handhebels 17 gebildet wird. Das Sperrelement 6 besitzt einen gegabelten rückwärtigen Teil 10, in welchem mittels einer Anlenkachse 9 das eine Ende eines Lenkers 12 gelagert ist. Dieser Lenker ist mit seinem anderen Ende mittels einer Anlenkachse 16 am gegabelten inneren Teil 14 des Handhebels 17 angelenkt.

Aus den Fig. 2 und 3 ist noch ersichtlich, dass der Handhebel 17 durch eine Sicherungsfeder 20 gesichert ist, die in eine Einschnappöffnung 21 im äusseren Teil 23 des Handhebels 17 eingreift. Hierdurch ergibt sich eine zusätzliche Sicherung des Handhebels 17.

Aus Fig. 2 ist ersichtlich, dass in Schliessstellung die vier Achsen 5, 9, 13, 16 auf einer zur Grundplatte 15 konvexen Kurve liegen. Dadurch ergibt sich ein Totpunktüberzug der hinteren Anlenkachse 16 des Lenkers 12 gegenüber der Schwenkachse 13 und der anderen Anlenkachse 9. Es ist ohne weiteres einzusehen, dass ein Druck auf den Haken 2 von aussen, der sich ergibt, wenn die Bordwand durch Ladegut nach aussen gedrückt wird, das Sperrelement 6 in Offenstellung zu drehen versucht. Weil aber die Anlenkachse 9 in der Schliessstellung hinterhalb einer Verbindungslinie zwischen der Schwenkachse 13 und der Anlenkachse 16 liegt, versucht der Lenker 12, die Anlenkachse 16 nach hintenherum um die Schwenkachse 13 zu ziehen, wodurch der Handhebel 17 verstärkt in Schliessstellung gedrückt wird.

Die angegebene Forderung, dass alle vier Achsen auf einer zur Grundplatte konvexen Kurve liegen müssen, hat auch Bedeutung, wenn man den Öffnungsvorgang betrachtet. Durch diese Forderung wird sichergestellt, dass beim Ausschwenken des Handhebels 17 der dabei nach vorne wandernde Lenker 12 auf das Sperrelement ein Drehmoment mit dem richtigen Drehsinn ausübt.

**Patentansprüche**

1. Verschluss für eine an einem Anschlag eines festen Aufbauteils anliegende abklappbare Bordwand (22) von Lastfahrzeugen, mit einer an dieser drehbar angeordneten, in der geschlossenen Bordwandstellung senkrecht verlaufenden Drehstange (26), mit einem an deren oberem Ende befestigten, in Schliessstellung ein Gegenelement am oberen Ende des festen Aufbauteils hintergreifenden Drehhaken (25) und mit einem kraftschlüssig mit der Drehstange verbundenen schwenkbaren Handhebel (17), dadurch gekennzeichnet, dass an der Drehstange (26) ein Vorsprung (2) befestigt ist, der bei hochgeklappter Bordwand und entriegeltem Bordwandverschluss sich am Anschlag (4) derart abstützt, dass die Bordwand sich in einem vorgegebenen Abstand von dem Anschlag befindet.

2. Verschluss nach Anspruch 1, dadurch gekennzeichnet, dass der Vorsprung (2) in Höhe des Handhebels (17) vorgesehen ist.

3. Verschluss nach einem der beiden Ansprüche 1 oder 2, dadurch gekennzeichnet, dass der Vorsprung als Haken (2) ausgebildet ist und in Schliessstellung in eine Ausnehmung (3) im festen Aufbauteil (1) eingreift.

4. Verschluss nach einem der vorhergehenden Ansprüche, dadurch gekennzeichnet, dass der Handhebel (17) auf einen an der Drehstange befestigten Kurbelarm (10) wirkt, und zwar über einen einerseits am Handhebel (17) und andererseits am Kurbelarm (10) angelenkten Lenker (12), wobei in der Schliessstellung die Schwenkachse (16) des Handhebels (17) zwischen den beiden Anlenkachsen (9, 16) des Verbindungsglieds (12) liegt und die Schnittpunkte dieser drei Achsen (9, 13, 16) zusammen mit der Drehachse (5) der Drehstange (26) mit einer Achsnormalebene auf einer — gesehen von ausserhalb der Bordwand in Richtung auf eine an der abklappbaren Bordwand (22) befestigte, den Betätigungsmechanismus für die Drehstange tragende Grundplatte (15) — konvexen Kurve liegen.

5. Verschluss nach Anspruch 4, dadurch gekennzeichnet, dass der Vorsprung (2) und der Kurbelarm (10) als einheitliches Sperrelement (6) ausgebildet sind, dass die Drehachse (5) der Drehstange (26) durch den mittleren Teil des Sperrelements (6) hindurchgeht, und dass die Drehstange (26) kraftschlüssig mit dem Sperrelement (6) verbunden ist.

6. Verschluss nach einem der beiden Ansprüchen 4 oder 5, dadurch gekennzeichnet, dass der äussere Teil (23) des Handhebels (17) in bezug auf seinen inneren Teil (14) um eine in Schliessstellung senkrecht zur Grundplatte (15) verlaufende Achse (19) abklappbar ist.

7. Verschluss nach einem der Ansprüche 4 bis 6, dadurch gekennzeichnet, dass die Grundplatte (15) zwei parallel im Abstand voneinander verlaufende Längsrippen (11) aufweist, in denen die Drehachse (5) der Drehstange (26) und gegebenenfalls auch die Schwenkachse (13) des Handhebels (17) gelagert sind.

8. Verschluss nach Anspruch 7, dadurch gekennzeichnet, dass die Längsrippen (11) sich bis über die Abklappachse (19) des äusseren Teils (23) des Handhebels (17) hinauserstrecken.

9. Verschluss nach Anspruch 8, dadurch gekennzeichnet, dass die Längsrippen (11) im Bereich des äusseren Teils (23) des Handhebels (17) auf der dem Handhebel (17) zugewandten Seite jeweils eine Abschrägung (18) aufweisen und so

einen Einlauftrichter für den äusseren Teil (23) des Handhebels (17) bilden.

## Claims

1. Locking arrangement for a drop sideboard (22) which rests against a stop of a fixed mounting on a vehicle with a bar (26) rotatably mounted on the sideboard and extending vertically when the sideboard is in a closed position, a rotatable hook (25) attached to the upper end of the bar to extend around the back of a corresponding element at the upper end of the fixed mounting when the sideboard is in a closed position an a pivoted manually operable lever (17) coupled with the bar (26), characterised by the bar (26) having a projection (2) which, when the sideboard has been swung upwards and the locking arrangement of the sideboard released, bears against the stop (4) so that the sideboard is positioned a preselected distance from the stop.

2. Locking arrangement in accordance with claim 1, characterised by the projection (2) being provided at the position of the lever (17).

3. Locking arrangement in accordance with claim 1 or 2, characterised by the projection being in the form of a hook (2) which, in the locked position, engages a recess (3) in the fixed mounting (1).

4. Locking arrangement in accordance with any one of the preceding claims, characterised by the lever (17) acting on an arm of a crank (10) secured to the bar through a link (12) pivoted at one end to the lever (17) and at the other end to the crank (10), in the locking position the pivot axis (16) of the lever (17) being situated between the two pivot axes (9, 16) of the link (12), the intersection points of the three said axes (9, 13, 16) with the axis of rotation (5) of the bar (26) and with a plane normal to the axis being positioned on a curve which is convex viewed from outside the sideboard and in the direction of a baseplate (15) secured to the sideboard (22) and bearing the operating mechanism for the bar (26).

5. Locking arrangement in accordance with claim 4, characterised by the projection (2) and the crank (10) forming an integral locking element (6), the axis of rotation of the bar (26) passing through the central part of the locking element (6) and the bar (26) being coupled with the locking element (6).

6. Locking arrangement in accordance with claim 4 or 5, characterised by the outer part (23) of the lever (17) being pivotable about a shaft (19) relative to the inner part (14) and which, in a closed position, is perpendicular to the baseplate (15).

7. Locking arrangement in accordance with any one of the claims 4 to 6, characterised by the baseplate (15) having two longitudinal ribs (11) in spaced parallel relationship between which is located the axis (5) of the bar (26) and, preferably, also the pivot axis (13) of the lever (17).

8. Locking arrangement in accordance with claim 7, characterised by the longitudinal ribs (11) extending beyond the shaft (19) about which the outer part (23) of the lever (17) pivots.

9. Locking arrangement in accordance with claim 8, characterised by the longitudinal ribs (11) in the region of the outer part (23) of the lever (17) being each provided on the side facing the lever (17) with a bevelled part (18) forming an entrance guide path for the outer part (23) of the lever (17).

## Revendications

1. Fermeture pour une ridelle arrière rabattable d'un camion pouvant venir s'appuyer contre une embrasure d'une partie stationnaire de la carrosserie, avec une espagnolette qui y est disposée rotative, et placée verticalement en position de fermeture de la ridelle arrière, avec un crochet fixé à sa partie supérieure, passant, à la position de fermeture, derrière un contre-élément à l'extrémité supérieure de la partie stationnaire de la carrosserie et avec un levier pivotant relié par adhérence à l'espagnolette, caractérisée en ce qu'à l'espagnolette (26) est fixée une protubérance (2) qui, lorsque la ridelle arrière est relevée et que la fermeture à espagnolette est déverrouillée, s'appuie sur l'embrasure (4) de façon que la ridelle arrière se trouve à une distance prédéterminée de l'embrasure.

2. Fermeture selon la revendication 1, caractérisée en ce que la protubérance (2) est prévue à la hauteur du levier (17).

3. Fermeture selon l'une des revendications 1 ou 2, caractérisée en ce que la protubérance a la forme d'un crochet (2) et vient en prise à la position de fermeture, dans un évidement (3) dans la partie fixe de la carrosserie (1).

4. Fermeture selon l'une des revendications précédentes, caractérisée en ce que le levier (17) agit sur une manivelle (10) fixée à l'espagnolette, et cela au moyen d'un guide (12) articulé, d'une part, sur le levier (17) et, d'autre part, sur la manivelle (10), ainsi à la position de fermeture, l'axe de pivotement (16) du levier (17) se trouve entre les deux axes de pivotement (9, 16) de l'organe de jonction (12) et les points où ces trois axes (9, 13, 16) coupent l'axe de rotation (15) de l'espagnolette (26) se trouvent sur une courbe convexe, avec un plan normal à l'axe, en regardant à partir de l'extérieur de la ridelle arrière dans la direction d'une plaque de base (15) portant le mécanisme de mise en action de l'espagnolette et fixée sur la ridelle arrière rabattable (22).

5. Fermeture selon la revendication 4, caractérisée en ce que la protubérance (2) et la manivelle (10) ont la forme d'un élément de verrouillage (6) en une pièce, en ce que l'axe de rotation (5) de l'espagnolette (26) traverse la partie médiane de l'élément de verrouillage (6), et en ce que l'espagnolette (26) est reliée par adhérence à l'élément de verrouillage (6).

6. Fermeture selon l'une des revendications 4 ou 5, caractérisée en ce que la partie extérieure (23) du levier (17) peut être rabattue par rapport à sa partie interne (14) autour d'un axe (19) se trouvant, en position de fermeture, perpendiculaire à la plaque de base (15).

7. Fermeture selon l'une des revendications 4 à 6, caractérisée en ce que la plaque de base (15) présente deux nervures longitudinales (11) parallèles l'une à l'autre ou bien à une certaine distance l'une de l'autre, dans lesquelles est placé l'axe de rotation (5) de l'espagnolette (26) et, le cas échéant, également l'axe de pivotement (13) du levier (17).

8. Fermeture selon la revendication 7, caractérisée en ce que les nervures longitudinales (11) s'étendent jusqu'au delà de l'axe de rabattement (19) de la partie extérieure (23) du levier (17).

9. Fermeture selon la revendication 8, caractérisée en ce que les nervures longitudinales (11) présentent, dans la zone de la partie externe (23) du levier (17) sur le côté tourné vers le levier (17), une forme de biseau (18) pour former ainsi un cône d'entrée de la partie extérieure (23) du levier (17).

FIG. 1

FIG. 2

FIG. 3

FIG. 4